# EUROPÄISCHE PATENTSCHRIFT

(11) **EP 1 235 991 B1**
(45) Veröffentlichungstag und Bekanntmachung des Hinweises auf die Patenterteilung: **11.08.2004**
(21) Anmeldenummer: 00965946.7
(22) Anmeldetag: 08.09.2000
(51) Int. Cl.: F16C 33/66, F16C 33/80

(54) **WÄLZLAGERUNG FÜR EINE WELLE ODER ROLLE UND VERFAHREN ZUR SCHMIERUNG EINER SOLCHEN WÄLZLAGERUNG**
ANTIFRICTION BEARING FOR A SHAFT OR ROLLER AND METHOD FOR LUBRICATING SUCH AN ANTIFRICTION BEARING
PALIER A ROULEMENTS POUR ARBRE OU ROULEAU, ET PROCEDE DE LUBRIFICATION D'UN PALIER A ROULEMENTS DE CE TYPE

(30) Priorität: 10.12.1999 DE 19959472
(43) Veröffentlichungstag der Anmeldung: 04.09.2002
(73) Patentinhaber: Sundwig GmbH, 58675 Hemer (DE)
(72) Erfinder: BERGER, Bernd, 41564 Kaarst (DE); SCHULTE, Heinrich, 59757 Arnsberg (DE); KOEPE-LOBITZ, Nicole, 58730 Fröndenberg (DE)
(74) Vertreter: Simons, Johannes, Dipl.-Ing.
(86) Internationale Anmeldenummer: PCT/EP2000/008776
(87) Internationale Veröffentlichungsnummer: WO 2001/042672

(56) Entgegenhaltungen:
- EP-A- 0 374 958
- EP-A- 0 854 314
- DE-A- 1 750 454
- US-A- 3 951 476
- US-A- 4 940 341
- DRYGA A I: "BEARING UNIT WITH DOSED LUBRICANT FEED" SOVIET ENGINEERING RESEARCH. (STANKI I INSTRUMENTY & VESTNIK MASHINOSTROENIA MASHINOSTROCNIE),US,ALLERTON PRESS, NEW YORK, Bd. 8, Nr. 6, 1988, Seiten 54-55, XP000113468

## Beschreibung

Die Erfindung betrifft eine Wälzlagerung für eine Welle, Walze oder Rolle, insbesondere für Wellen, Walzen oder Rollen eines Walzwerks, in welchem Metallbänder gewalzt werden, mit einer Schmierstoffversorgung, welche der Wälzlagerung einen fließfähigen Schmierstoff zuführt, und mindestens einer berührungslosen Labyrinth-Dichtung zum Abdichten der Wälzlagerung. Darüber hinaus betrifft die Erfindung ein Verfahren zum Schmieren einer solchen Wälzlagerung mit einem fließfähigen Schmierstoff.

Bei der Lagerung von Wellen oder Wälzen ist das jeweilige Wälzlager mit seinem Außenring fest beispielsweise in einem Gehäuseelement gehalten, während sein Innenring mit der Welle dreht. Die Relativbewegung zwischen dem Innenring und dem Außenring des Wälzlagers wird dabei durch Wälzkörper ermöglicht, welche sich zwischen dem Innen- und dem Außenring des Lagers bewegen. Im Gegensatz dazu sind Rollen auf einer feststehenden Achse gelagert, so daß der äußere Ring der jeweiligen Lagerung mit der Rolle verbunden ist oder diese bildet und der innere Ring des Lagers fest auf der Achse sitzt. Auch in diesem Fall wird die Relativbewegung zwischen dem Innen- und dem Außenring des Lagers durch die Wälzkörper ermöglicht. Rollen dieser Art werden in Walzgerüsten als sogenannte "Stützlager" eingesetzt, um die Stützwalzen gegenüber dem Gerüst abzustützen.

Schwer belastete Wälzlager, wie sie beispielsweise zum Lagern der Stützwalzen oder -rollen eines Walzwerks eingesetzt werden, sind aufgrund der von ihnen aufgenommen Kräfte einerseits der Gefahr eines abrasiven Verschleißes und andererseits einer erheblichen Wärmeentwicklung ausgesetzt, welche ebenfalls zu einem vorzeitigen Verschleiß der Lager führen kann. Aus diesem Grund werden derartige Wälzlager in der Regel mit einem im Umlauf geführten Schmierstoff versorgt. Bei dem Schmierstoff handelt es sich in der Regel um ein gut fließfähiges Öl.

Der durch das Wälzlager geleitete Schmierstoffstrom gewährleistet zum einen die optimale Benetzung der Reibflächen des Lagers mit Schmierstoff. Zum anderen führt der Schmierstoff die im Betrieb entstehende Wärme ab, so daß das Lager bei einer optimalen Betriebstemperatur gehalten werden kann.

Ein Problem besteht bei der Schmierung von Wälzlagern, die von einem Schmierstoff durchströmt werden, in der Abdichtung der Lagerstelle. Aufgrund der durch das Lager geleiteten Schmierstoffströmung wird der Schmierstoff bei Verwendung von an den Wellen oder Rollen anliegenden Dichtungen in den Dichtspalt zwischen den Dichtlippen der Dichtung und der Welle bzw. Rolle gepreßt.

Dieser Effekt macht es erforderlich, die Dichtlippen mit großer Kraft gegen die Welle bzw. Rolle zu drücken. Andernfalls besteht die Gefahr, daß Schmierstoff von der sich drehenden Welle bzw. Rolle aus dem Bereich des Lagers geschleppt wird und unkontrolliert in die Umgebung gelangt. Die großen Andrückkräfte führen dazu, daß die Reibung zwischen der Welle bzw. Rolle und den Dichtlippen der Dichtung groß ist, so daß die Dichtlippen einem erhöhten Verschleiß ausgesetzt sind. Insbesondere bei auf einer Achse gelagerten, selbst nicht direkt angetriebenen Rollen kann durch den hohen Anpressdruck die freie Bewegung der Rolle so stark behindert werden, daß die Rollen der Drehung der von ihr gestützten Walze nicht folgt. Der dadurch verursachte Schlupf zwischen Rolle und Walze bringt die Gefahr einer Beschädigung der Walzen- oder Rollenoberfläche mit sich.

Es ist versucht worden, die voranstehend erläuterten Probleme bei der Abdichtung von Wälzlagerungen, die von Schmierstoff durchströmt werden, durch den Einsatz berührungsloser Labyrinth-Dichtungen zu lösen. Derartige Dichtungen weisen mehrere koaxial zur Drehachse der Welle bzw. Rolle und beabstandet zueinander angeordnete Scheibenelemente auf, von denen wechselnd aufeinanderfolgend jeweils eines mit dem sich im Betrieb jeweils drehenden Element und eines mit dem jeweils stehenden bzw. mit einer anderen Geschwindigkeit sich drehenden Element verbunden ist. So sind beispielsweise bei der Abdichtung der Wälzlagerung einer Welle oder Walze die sich drehenden Elemente der Labyrinth-Dichtung mit der Welle verbunden, während die feststehenden Elemente fest mit einem Gehäuseteil verkoppelt sind. Demgegenüber sind bei der Abdichtung einer Wälzlagerung einer Rolle die sich drehenden Elemente mit dem äußeren, sich drehenden Rollenmantel verbunden, während die stehenden Elemente fest auf der Achse sitzen. In den Raum zwischen den Scheibenelementen eindringender Schmierstoff wird aufgrund der Bewegung der sich drehenden Scheibenelemente in radialer und tangentialer Richtung beschleunigt. Auf diese Weise entsteht in den Zwischenräumen ein Druck, welcher dem Druck des in den Zwischenraum eindringenden Schmierstoffs entgegengesetzt ist und ein Austreten von Schmierstoff in die Umgebung verhindern soll.

Der Vorzug von berührungslosen Labyrinth-Dichtungen besteht darin, daß sie annähernd keinem Verschleiß unterliegen, kostengünstig herstellbar sind und keine Reibung erzeugen. In der Praxis, insbesondere bei der Abdichtung von Wälzlagern an Wellen oder Rollen eines Walzwerks, zeigt sich jedoch, daß sie ein Austreten von Schmierstoff nicht mit der geforderten Zuverlässigkeit verhindern können.

Neben dem voranstehend erläuterten Stand der Technik ist aus der EP 0 374 958 A2 eine Schmiermittelversorgung für ein mit Hilfe einer Labyrinth-Dichtung gegenüber der Umgebung abgedichtetes Wälzlager bekannt. Mittels eines sensorgestützten Regelkreises wird dabei sichergestellt, dass die der Wälzlager zugeführte Schmierstoffmenge stets an dessen jeweiligen Verschleißzustand angepasst ist. Dazu erfasst der Sensor die Temperatur, die Vibration oder das im jeweiligen Wälzlager wirksame Drehmoment. Die auf diese Weise vom Sensor jeweils gelieferten Messwerte geben Aufschluss über den Verschleißzustand des überwachten Lagers. Der Sensor stellt somit sicher, daß auch bei fortschreitendem Verschleiß stets eine ausreichende Versorgung des Wälzlagers gewährleistet ist.

Zusätzlich ist aus XP000113468, 1323 Soviet Engineering Research 8(1988) No. 6, New York, US, eine Schmiermittelversorgung bekannt, bei der die zugeführte Ölmenge während des Betriebs in einem festen Verhältnis zum durch die Zentrifugalkraft auf das Öl aufgebauten Druck und damit zur Drehzahl gehalten wird. Bei stillstehendem Lager kann dieses Verhältnis mit Hilfe von mechanischen Stellelementen innerhalb weiterer Grenzen variiert werden. Auf Maßnahmen zum Abdichten eines mittels einer Labyrinth-Dichtung abgedichteten Lagers wird dabei nicht eingegangen. Statt dessen ist bei diesem Stand der Technik genauso wie bei der zuvor diskutierten Schmierstoffversorgung die Schmierstoffzufuhr allein danach ausgerichtet, welche Schmierstoffmenge für einen ordnungsgemäßen Betrieb des jeweils versorgten Lagers erforderlich ist.

Die Aufgabe der Erfindung besteht darin, eine Wälzlagerung der voranstehend erläuterten Art so zu verbessern, daß auch bei Einsatz von berührungslos dichtenden Labyrinth-Dichtungen eine ordnungsgemäße Abdichtung des Lagers gewährleistet ist. Darüber hinaus soll ein Verfahren zum Schmieren eines mittels einer Labyrinth-Dichtung abgedichteten Wälzlagers mit einem Schmierstoffstrom angegeben werden, welches das Austreten von Schmierstoff aus der Dichtung verhindert.

Diese Aufgabe wird hinsichtlich einer Wälzlagerung der eingangs angegebenen Art dadurch gelöst, daß die Schmierstoffversorgung den Schmierstoff erst nach Erreichen einer Mindestdrehzahl in Abhängigkeit von der Drehzahl der Welle, Walze oder Rolle zuführt und die Schmierstoffzufuhr nach Unterschreiten der Mindestdrehzahl beendet.

Hinsichtlich des Verfahrens wird die voranstehend genannte Aufgabe dadurch gelöst, daß der Wälzlagerung erst nach Überschreiten einer Mindestdrehzahl Schmierstoff zugeführt, daß der zugeführte Schmierstoffstrom in Abhängigkeit von der Drehzahl der Welle, Walze oder Rolle verändert und daß die Schmierstoffzufuhr beendet wird, wenn die Mindestdrehzahl unterschritten wird.

Indem gemäß der Erfindung die jeweilige Drehzahl, mit welcher die Elemente der Labyrinth-Dichtung relativ zueinander bewegt werden, bei der Schmierstoffzufuhr berücksichtigt wird, wird dem Umstand Rechnung getragen, daß die Dichtwirkung einer Labyrinth-Dichtung aufgrund der mit zunehmender Drehzahl ansteigenden Beschleunigungen, die der Schmierstoff an den sich drehenden Scheibenelementen der Dichtung erfährt, ebenfalls zunimmt. Dementsprechend wird gemäß der Erfindung bei geringen Drehzahlen ein geringerer Volumenstrom an Schmierstoff durch das Lager geleitet als bei höheren Drehzahlen. Der geringe Volumenstrom bei niedrigen Drehzahlen bewirkt, daß nur wenig Schmierstoff in den Bereich der Labyrinth-Dichtung gelangt, so daß die Labyrinth-Dichtung auch bei niedrigen Drehzahlen trotz der dann geringen Beschleunigungskräfte im Bereich der Zwischenräume der Dichtung eine ausreichende Dichtwirkung entfaltet.

Die Gefahr eines vorzeitigen Verschleißes des Wälzlagers oder eines übermäßigen Anstiegs der Lagertemperatur wird durch die erfindungsgemäße Regulierung der Schmierstoffzufuhr nicht vergrößert, da bei niedrigen Drehzahlen die im Lager verrichtete Reibarbeit gering und damit einhergehend sowohl der abrasive Verschleiß als auch die Menge an frei werdender Wärmeenergie bedeutungslos ist.

Dabei führt die Schmierstoffversorgung den Schmierstoff erst nach Erreichen einer Mindestdrehzahl zu und beendet die Schmierstoffzufuhr nach Unterschreiten der Mindestdrehzahl wieder. Dieser erfindungsgemäßen Steuerung der Schmierstoffzufuhr liegt die Feststellung zugrunde, daß die nach einem Stillstand in der Wälzlagerung noch vorhandene Schmierstoffmenge regelmäßig ausreicht, um bis zu einer bestimmten Drehzahl einen ungestörten, verschleißfreien Betrieb des Wälzlagers zu gewährleisten. Indem bei niedrigen Drehzahlen unterhalb der Grenzdrehzahl kein zusätzlicher Schmierstoff dem Lager zugeführt wird, wird das Austreten von Schmierstoff in diesem für die Dichtwirkung der Labyrinth-Dichtung kritischen Drehzahlbereich sicher vermieden.

Eine weitere vorteilhafte Ausgestaltung der Erfindung ist dadurch gekennzeichnet, daß der Volumenstrom des Schmierstoffs mit zunehmender Drehzahl ansteigt. Auf diese Weise kann berücksichtigt werden, daß einerseits mit zunehmender Drehzahl die Reibarbeit im Wälzlager und damit einhergehend die Lagertemperatur steigt, andererseits aber auch die Wirksamkeit der Labyrinth-Dichtung zunimmt.

Weitere vorteilhafte Ausgestaltungen der Erfindung sind in den Patentansprüchen angegeben und werden nachfolgend im Zusammenhang mit der Erläuterung eines Ausführungsbeispiels anhand einer Zeichnung näher beschrieben. Es zeigen schematisch:

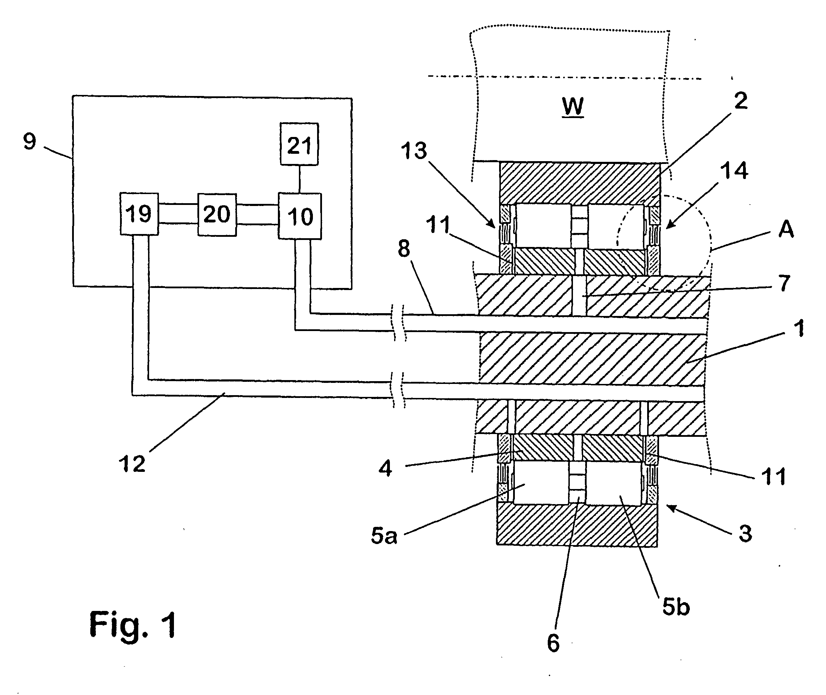

- Fig. 1: eine Wälzlagerung für eine Rolle eines Walzwerks in einem Längsschnitt;

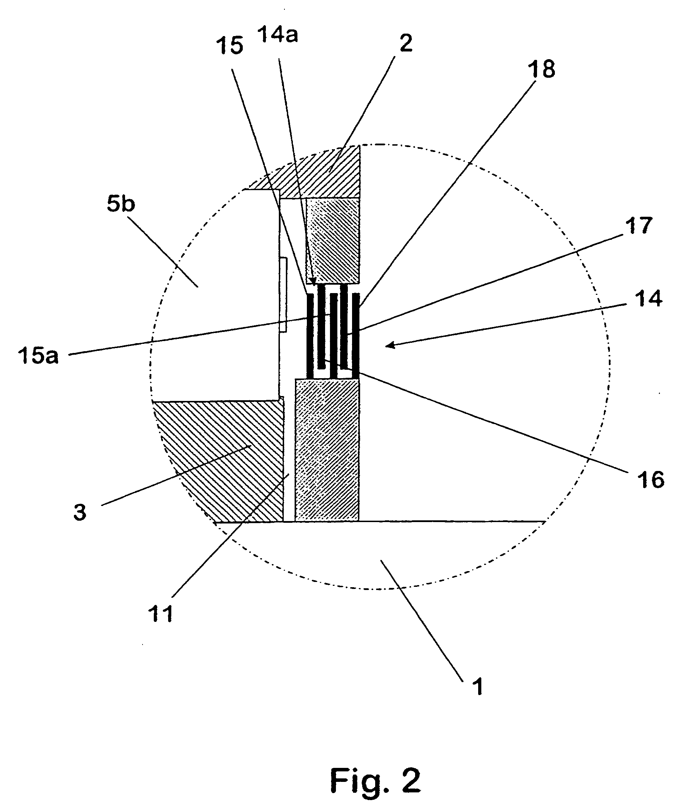

- Fig. 2: einen Ausschnitt A der Fig. 1 in vergrößerter Ansicht.

Auf einer feststehenden Achse 1 eines weiter nicht dargestellten Walzwerks zum Walzen von Metallbändern ist eine Stützrolle 2 drehbar gelagert. Über die Stützrolle 2 ist eine im einzelnen nicht dargestellte Walze W des nicht gezeigten Walzgerüstes abgestützt. Dabei sind längs der Walze W mehrere gleichartige Stützrollen 2 beabstandet zueinander angeordnet.

Die Stützrolle 2 bildet den äußeren Ring eines Wälzlagers 3, dessen Innenring 4 fest auf der Achse 1 sitzt. Zwischen der Stützrolle 2 und dem Innenring 4 sind rollenförmige Wälzkörper 5a,5b angeordnet, welche die Relativbewegung von sich drehender Stützrolle 2 und feststehendem Innenring 3 ermöglichen.

Die Wälzkörper 5a,5b sind dabei in Achsrichtung der Achse 1 beabstandet angeordnet, so daß zwischen ihnen ein radial umlaufender Freiraum 6 gebildet ist. In den Freiraum 6 mündet ein Abzweig 7 einer Schmierstoffversorgungsleitung 8, die in die Achse 1 eingeformt und mit einer Schmierstoffversorgung 9 verbunden ist.

Seitlich des Innenrings 3 sind Abströmöffnungen 11 vorgesehen, die mit einer ebenfalls in die Achse 1 eingeformten Rückführleitung 12 verbunden sind. Über die Rückführleitung 12 wird der dem Wälzlager 3 zugeführte Schmierstoffstrom zurück zu der Schmierstoffversorgung 9 geleitet.

Auf der dem jeweiligen benachbarten Wälzkörper 5a,5b abgewandten Seite der Wälzkörper 5a,5b ist jeweils eine Labyrinth-Dichtung 13,14 angeordnet. Die Labyrinth-Dichtungen 13,14 sind durch mehrere Scheibenelemente 15,16,15a,17,18 gebildet. Diese sind, beginnend mit dem dem Innenraum der Wälzlagerung 3 zugeordneten Scheibenelement 15, welches fest mit der Achse 1 verbunden ist, in Achsrichtung nach außen in wechselnder Folge drehfest mit der Stützrolle 2 (Scheibenelemente 16,17) bzw. fest mit der Achse 1 (Scheibenelemente 15,15a,18) verbunden.

Die Schmierstoffversorgung 9 umfaßt eine Pumpe 10, einen Filter 19, einen Wärmetauscher 20 und eine Steuereinrichtung 21. In Abhängigkeit von der Drehzahl der durch die Walze W vorgegebenen Drehzahl der Stützrolle 2 regelt die Steuereinrichtung 21 die Förderleistung der Pumpe 10 so, daß die Schmierstoffversorgung 9 der Wälzlagerung 3 unter Berücksichtigung der jeweiligen Drehzahl der Stützrolle 2 Schmierstoff zuführt. Bei diesem Schmierstoff handelt es sich beispielsweise um ein gut fließfähiges Öl, einen Ölnebel oder einen Öl-Luft-Strom.

Zum Zeitpunkt des Anfahrens des Walzwerks ist das Wälzlager 3 mit einer Restmenge Schmierstoff gefüllt. Diese Restmenge ist ausreichend, um nach dem Anfahren des Walzwerks im unteren Drehzahlbereich eine ordnungsgemäße Schmierung der Wälzkörper 5a,5b zu gewährleisten. Sobald die Stützrolle 2 eine Mindestdrehzahl erreicht, schaltet die Steuereinrichtung 21 die Pumpe 10 der Schmierstoffversorgung 9 ein und es wird Schmierstoff in die Wälzlagerung 3 gefördert. Der Volumenstrom des Schmierstoffs steigt dabei mit zunehmender Drehzahl an, so daß die Wälzkörper 5a,5b in jeder Betriebssituation ausreichend geschmiert und gekühlt sind.

Der in die Zwischenräume 14a zwischen den Scheibenelementen 15,16,17,18 der Labyrinth-Dichtungen 13,14 eindringende Schmierstoff wird durch die Drehung der mit der Stützrolle 2 drehenden Scheibenelemente 16,17 beschleunigt. Auf diese Weise entsteht in den Zwischenräumen 14a ein Druck, der dem eindringenden Schmierstoff entgegengesetzt ist. Mit zunehmender Drehzahl der Stützrolle 2 nimmt dieser Gegendruck zu, so daß trotz des mit zunehmender Drehzahl der Stützrolle 2 größer werdenden Schmierstoffstroms die Dichtheit der Labyrinth-Dichtungen 13,14 gewährleistet ist.

Der aus der Wälzlagerung 3 zur Schmierstoffversorgung 9 zurückströmende Schmierstoff wird, nachdem er im Filter 19 gereinigt und im Wärmetauscher 20 gekühlt worden ist, im Umlauf mittels der Pumpe 10 wieder der Wälzlagerung 3 zugeführt.

Im Zuge der mit einem Abbremsens des Walzwerks einhergehenden Abnahme der Drehzahl der Stützrolle 2 wird der durch die Wälzlagerung 3 geförderte Schmierstoffstrom von der Schmierstoffversorgung 9 reduziert, bis die Mindestdrehzahl erreicht ist. Bei Unterschreiten der Mindestdrehzahl wird die Schmierstoffzufuhr beendet, so daß trotz der in diesem Drehzahlbereich geringen Wirksamkeit der Labyrinth-Dichtungen 13,14 ein Austreten von Schmierstoff aus der Wälzlagerung 3 vermieden wird.

### BEZUGSZEICHENLISTE

- 1: Achse
- 2: Stützrolle
- 3: Wälzlager
- 4: Innenring
- 5a,5b: Wälzkörper
- 6: Freiraum
- 7: Abzweig
- 8: Schmierstoffversorgungsleitung
- 9: Schmierstoffversorgung
- 10: Pumpe
- 11: Abströmöffnungen
- 12: Rückführleitung
- 13,14: Labyrinth-Dichtung
- 14a: Zwischenräume
- 15,15a,16,17,18: Scheibenelemente
- 19: Filter
- 20: Wärmetauscher
- 21: Steuereinrichtung

- W: Walze

## Patentansprüche

1. Wälzlagerung für eine Welle, Walze oder Rolle (2), insbesondere für Wellen, Walzen oder Rollen (2) eines Walzwerks, in welchem Metallbänder gewalzt werden, mit einer Schmierstoffversorgung (9), welche der Wälzlagerung (3) einen fließfähigen Schmierstoff zuführt, und mindestens einer berührungslosen Labyrinth-Dichtung (13,14) zum Abdichten der Wälzlagerung (3), **dadurch gekennzeichnet, daß** die Schmierstoffversorgung (9) den Schmierstoff erst nach Erreichen einer Mindestdrehzahl in Abhängigkeit von der Drehzahl der Welle, Walze oder Rolle (2) zuführt und die Schmierstoffzufuhr nach Unterschreiten der Mindestdrehzahl beendet.

2. Wälzlagerung nach Anspruch 1, **dadurch gekennzeichnet, daß** der Volumenstrom des Schmierstoffs mit zunehmender Drehzahl ansteigt.

3. Wälzlagerung nach einem der voranstehenden Ansprüche, **dadurch gekennzeichnet, daß** der Schmierstoff ein Öl ist.

4. Verfahren zum Schmieren eines mit einer Labyrinth-Dichtung (13,14) abgedichteten Wälzlagerung (3) für eine Welle, Walze oder eine Rolle (2) mit einem fließfähigen Schmierstoff, **dadurch gekennzeichnet, daß** der Wälzlagerung (3) erst nach überschreiten einer Mindestdrehzahl Schmierstoff zugeführt, daß der zugeführte Schmierstoffstrom in Abhängigkeit von der Drehzahl der Welle, Walze oder Rolle (2) verändert und d a ß die Schmierstoffzufuhr beendet wird, wenn die Mindestdrehzahl unterschritten wird.

5. Verfahren nach Anspruch 4, **dadurch gekennzeichnet, daß** der Schmierstoffstrom mit zunehmender Drehzahl vergrößert und mit abnehmender Drehzahl verringert wird.

## Claims

1. Antifriction bearing for a shaft, roll, or roller (2), in particular for shafts, rolls, or rollers (2) of a rolling mill in which metal strips are being rolled, with a lubricant supply (9), which delivers a fluid lubricant to the antifriction bearing, and at least one contact-free labyrinth seal (13, 14) for sealing the antifriction bearing (3), **characterised in that** the lubricant supply (9) does not deliver the lubricant until a minimum revolution speed is reached as a function of the revolution speed of the shaft, roll, or roller (2), and the lubricant delivery is ended after the revolution speed falls below a minimum value.

2. Antifriction bearing according to Claim 1,
**characterised in that** the volume flow of the lubricant rises as the revolution speed increases.

3. Antifriction bearing according to one of the foregoing claims, **characterised in that** the lubricant is an oil.

4. Method for the lubrication of an antifriction bearing (3) sealed with a labyrinth seal (13, 14) for a shaft, roll, or roller (2) with a fluid lubricant,
**characterised in that** lubricant is not delivered to the antifriction bearing (3) until a minimum revolution speed is exceeded, that the lubricant flow delivered is changed as a function of the revolution speed of the shaft, roll, or roller (2), and that the lubricant delivery is ended when the revolution speed falls below a minimum value.

5. Method according to Claim 4, **characterised in that** the lubricant flow increases as the revolution speed rises, and is reduced as the revolution speed decreases.

## Revendications

1. Palier à roulements pour un arbre, un cylindre ou un rouleau (2), notamment pour l'arbre, le cylindre ou le rouleau (2) d'un laminoir dans lequel une bande de métal est laminée, comportant une alimentation en lubrifiant (9) qui envoie un lubrifiant fluide vers le palier à roulements (3), et au moins un joint labyrinthe sans contact (13, 14) permettant d'étanchéifier le palier à roulements (3), **caractérisé en ce que** l'alimentation en lubrifiant (9) envoie tout d'abord le lubrifiant après que l'on a atteint un nombre de tours-minute minimal qui est fonction du nombre de tours-minute de l'arbre, du cylindre ou du rouleau (2), et **en ce que** l'envoi du lubrifiant est interrompu lorsque l'on retombe en dessous du nombre de tours-minute minimal.

2. Palier à roulements, selon la revendication 1, **caractérisé en ce que** le flux volumétrique du lubrifiant s'accroît lorsque le nombre de tours-minute augmente.

3. Palier à roulements, selon l'une des revendications précédentes, **caractérisé en ce que** le lubrifiant consiste en une huile.

4. Procédé de lubrification, à l'aide d'un lubrifiant fluide, d'un palier à roulements (3) dont l'étanchéité est assurée par un joint labyrinthe (13, 14), et qui est destiné à un arbre, un cylindre ou un rouleau (2), **caractérisé en ce que** du lubrifiant est tout d'abord envoyé vers le palier à roulements (4) après que l'on a dépassé un nombre de tours-minute minimal, **en ce que** le débit de lubrifiant envoyé est modifié en fonction du nombre de tours-minute de l'arbre, du cylindre ou du rouleau (2), et **en ce que** l'envoi de lubrifiant est interrompu lorsque l'on retombe en dessous du nombre de tours-minute minimal.

5. Procédé, selon la revendication 4, **caractérisé en ce que** le débit de lubrifiant s'accroît lorsque le nombre de tours-minute augmente, et décroît lorsque le nombre de tours-minute diminue.
